# EUROPEAN PATENT SPECIFICATION

(11) **EP 4 043 308 B1**
(45) Date of publication and mention of the grant of the patent: **30.07.2025**
(21) Application number: 22155536.0
(22) Date of filing: 08.02.2022
(51) Int. Cl.: B60W 20/11, B60W 10/06, B60W 10/08, B60W 10/10, B60W 10/26, B60W 30/18, B60W 30/182, B60K 6/10, B60K 6/448, B60K 6/46, B60K 6/48, B60K 6/52, B60W 50/00

(54) **CONTROL STRATEGY OF A HYBRID PROPULSION SYSTEM**
STEUERSTRATEGIE EINES HYBRIDANTRIEBSSYSTEMS
STRATÉGIE DE CONTRÔLE POUR SYSTÈME À PROPULSION HYBRIDE

(30) Priority: 12.02.2021 IT 202100003203
(43) Date of publication of application: 17.08.2022
(73) Proprietor: Dumarey Automotive Italia S.p.A., 10129 Torino (IT)
(72) Inventor: VASSALLO, Alberto Lorenzo, Torino (IT); GOLISANO, Roberto, Torino (IT); ALFIERI, Vincenzo, Torino (IT); BINETTI, Giulio, Torino (IT); MAZZARA BOLOGNA, Giuseppe, Torino (IT); SCAVONE, Luca, Torino (IT)
(74) Representative: Bruni, Giovanni

(56) References cited:
- EP-A1- 3 653 458
- US-A1- 2011 288 737
- US-A1- 2016 339 904
- US-A1- 2017 217 424
- US-B1- 6 314 347

## Description

### Field of the invention

The present invention relates to an innovative control strategy for a hybrid propulsion system and to the hybrid propulsion system controlled by said control method and equipped with a kinetic energy recovery system (KERS).

In particular, the hybrid propulsion system comprises an internal combustion engine, which may also be powered by hydrogen, one or more electric motors and at least one kinetic energy recovery system, possibly supported by one or more batteries.

Applications of the hybrid propulsion system, according to the present invention, may take place in the automotive sector, in particular heavy vehicles, buses, off-road vehicles, or in the sector of stationary installations for generating power (e.g. "GenSet") or combined heat and power.

The control strategy aims to optimize the hybrid propulsion system in terms of performance, fuel consumption, emissions, durability, comfort (noise, vibration and harshness, usually referred to as NVH) and rangeability.

### Background art

Motor vehicles typically operate by using an internal combustion engine to convert energy from a fuel, such as petrol or diesel, into mechanical energy to drive the motor vehicle and thus provide motion to the vehicle's wheels. Unfortunately, fossil fuels are expensive and contribute to environmental pollution. Because of these drawbacks, attention has been paid to the problems of reducing fuel consumption and pollutants emitted by cars and other highway vehicles.

To alleviate some of these drawbacks, hybrid vehicles with hybrid propulsion systems have been proposed in different configurations. For example, in some known designs, the vehicle's batteries are used to power an electric motor that provides power to the wheels, while the internal combustion engine powers a generator and can be operated in its most efficient output power range in terms of fuel consumption, the internal combustion engine still allowing the electric motor to drive the vehicle. In another configuration, commonly referred to as a parallel hybrid vehicle, the internal combustion engine and electric motor are coupled via a complex gear train so that both can provide torque to drive the vehicle. In a parallel hybrid vehicle, the vehicle can be operated in several modes, including a mode where the engine runs at a constant speed and excess power is converted by a motor/generator to electrical energy for storage in batteries. Other arrangements and modes of operation of hybrid vehicles are also known.

Electrical energy can be stored using various devices which can also be used simultaneously.
- Batteries: these have a lower energy density than fuel and can be sized to store maximum energy, exchange maximum power or find a compromise between the two extremes.
- Super-capacitors: compared to batteries, they have a higher energy density and can transfer and receive more power, but do not guarantee charge retention for medium to long periods.
- Kinetic energy recovery systems, commonly known as electrically driven flywheels: the energy is stored as kinetic energy of a flywheel put into rotation by an electric motor. The energy storage is a completely mechanical process and has control aspects still different from the previous ones.

The task of the control system is the management of energy flows between the various components of the hybrid propulsion system (internal combustion engine, electric motor(s), transmission) and the energy accumulators (batteries, super-capacitors, electrically driven flywheels) to meet a given power demand (torque and speed) from the driver. With respect to a traditional control system of delivered torque, this control system, which is typical of hybrid vehicles, lies somewhere in an intermediate position between the algorithms for interpreting the driver's command (transformation of the acceleration and brake pedals position into a request for torque) and those controlling individual components (engines, transmission, brakes). The energy management algorithms are inspired by the criteria of minimising overall energy consumption (fuel and electricity), while respecting a constant average evolution of the state of charge of the batteries, as well as the physical limits of the components and the constraints dictated by the requirements of comfort and/or pleasant driving.

The well-known control strategies for hybrid propulsion systems, although based on sophisticated algorithms of a heuristic or optimal control nature, fail to provide an output that optimises all relevant parameters such as performance, fuel consumption, emissions, durability, comfort and rangeability at any point in the vehicle's operation. They also require a lot of calibration effort and do not allow the self-learning of equally important parameters such as the route to be followed, the driver's driving style or road traffic conditions.

As an example, document EP 3653458 A1 discloses a control method for a hybrid vehicle, which includes: creating a travel route from a starting point to a destination through a stopping point by referring to map information; estimating a parking time period of the hybrid vehicle at the stopping point; predicting a traveling load of the hybrid vehicle in each of sections divided in the created travel route by referring to the map information; and setting, for each of the sections, a traveling mode of an EV mode, in which the battery provides power for traveling as a main power supply, or an HV mode, in which the internal combustion engine provides the power for traveling as the main power supply, on the basis of the parking time period and the traveling load.

There is therefore a need to define an innovative control strategy for a hybrid propulsion system that avoids or at least minimises the above-mentioned drawbacks.

### Summary of the invention

In order to substantially solve the technical problems outlined above, an object of the present invention is to define an innovative control strategy or method for a hybrid propulsion system equipped with a kinetic energy recovery system.

The control strategy aims to optimise overall system efficiency, emissions, durability and comfort.

The control strategy is developed according to an optimal and discrete selection of propulsion operating modes according to the load of the hybrid propulsion system and uses adaptive logic. In particular, three main operating modes of the hybrid propulsion system can be selected depending on the mission profile and the specific electrical and mechanical architecture. The propulsion operating modes include "park","economy" and "power".

This versatility and simplicity of control strategy makes the relevant hybrid propulsion system suitable for the automotive sector, in particular heavy vehicles, buses, off-road vehicles, but also for the stationary sector for power generation or power and heat generation in combined mode. In particular, the internal combustion engine can also be powered by hydrogen.

The control strategy according to the present invention is organised by means of a hierarchical control structure, specifically designed to control and optimise the applications and configurations of the hybrid propulsion system.

The hierarchical structure has two levels of control: an external control level called "Propulsion operating mode selection" and an internal control level called "Propulsion operating mode control".

Both control levels of the hierarchical structure combine a multivariable, optimal control technique with learning and adaptation strategies to ensure the best performance under all real-life operating conditions of the hybrid propulsion system.

Therefore, according to the present invention a control strategy for a hybrid propulsion system provided with a kinetic energy recovery system is provided, the control strategy having the features set forth in the independent process claim appended hereto.

Furthermore, the present invention relates to a hybrid propulsion system provided with an internal combustion engine and a kinetic energy recovery system, having the characteristics set forth in the independent product claim, appended to the present description.

Further preferred and/or particularly advantageous embodiments of the invention are described according to the characteristics set forth in the appended dependent claims.

### Brief description of the drawings

The invention will now be described with reference to the appended drawings, which illustrate certain non-limiting implementation examples, wherein:
- figure 1 is a block diagram of the hierarchical structure of the control strategy according to one embodiment of the present invention,
- figure 2 is a block diagram of the external control level of the hierarchical structure of figure 1,
- Figure 3 is a block diagram of the internal control level of the hierarchical structure of figure 1,
- figure 4 is a schematic representation of the optimal and discrete selection of propulsion operating modes as a function of the load of the hybrid propulsion system,
- Figure 5 is a schematic representation of a first electro-mechanical architecture of the hybrid propulsion system using the control strategy from Figures 1-3, suitable for bus applications,
- Figure 6 schematically illustrates a second electro-mechanical architecture of the hybrid propulsion system using the control strategy of Figures 1 to 3, also suitable for bus application,
- Figure 7 schematically illustrates a third electro-mechanical architecture of the hybrid propulsion system, in series hybrid or 'range extender' configuration, using the control strategy shown in Figures 1 to 3, also suitable for bus application,
- Figure 8 schematically illustrates a fourth electro-mechanical architecture of the hybrid propulsion system using the control strategy in Figures 1-3, suitable for GenSet application, and
- Figure 9 schematically illustrates a fifth electro-mechanical architecture of the hybrid propulsion system using the control strategy in Figures 1 to 3, also suitable for GenSet application.

### Detailed description of the invention

By way of non-limiting example only, the present invention will now be described by reference to the above figures.

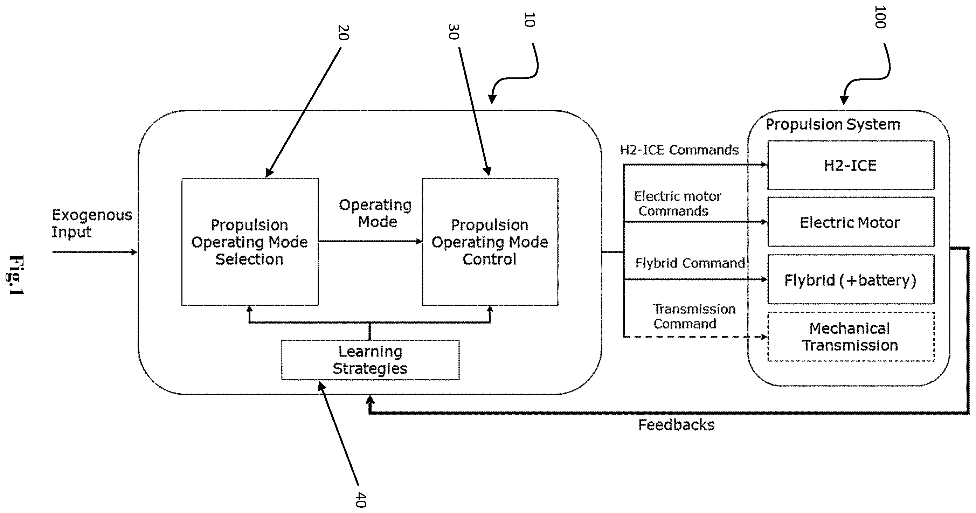

In particular, Figure 1 illustrates a block diagram of the hierarchical structure of the control strategy or method for a hybrid propulsion system provided with a kinetic energy recovery system, according to an embodiment of the present invention.

In the course of the present description, the terminology "control strategy" or "control method" will be used indifferently, the same concept being intended.

The control strategy is developed according to an optimal and discrete selection of propulsion operating modes as a function of the load of the hybrid propulsion system. In particular, it is possible to select three main operating modes of the hybrid propulsion system depending on the mission profile and the specific electrical and mechanical architecture. The selected operating modes are "park", "economy" and "power".

The control method according to the present invention has been organised by means of a hierarchical control structure 10, specifically designed to control and optimise the applications and configurations of the hybrid propulsion system 100. The hierarchical control structure 10 has two layers of control: an outer control layer 20, subservient to "Propulsion operating mode selection" and an inner control layer 30 subservient to "Propulsion operating mode control".

With reference to figure 1, the hierarchical control structure 10 receives as input a plurality of exogenous inputs from the external environment and a plurality of feedbacks from the hybrid propulsion system 100. Based on the two plurality of input data, the outer control layer 20, using strategies that will be explained below, performs the selection of the most appropriate propulsion operating mode for the hybrid propulsion system 100.

Once the propulsion operating mode has been selected, the inner control layer 30, with the strategies to be explained below, performs control of all subsystems of the hybrid propulsion system. As exemplified in the figure, such subsystems may be: the internal combustion engine (in a preferred configuration, powered by hydrogen and therefore referred to in figure 1 as H2-ICE), at least one electric motor/generator, a kinetic energy recovery system (in the example in figure 1, an electrically driven flywheel), preferably assisted by at least one battery, a mechanical transmission of motion. From each of said subsystems, depending on the operating mode acting, feedback signals are provided, which constitute the plurality of feedback inputs to the hierarchical control structure 10.

As will be seen, both the outer control layer 20 and the inner control layer 30 use appropriate a functional layer 40 of learning strategies.

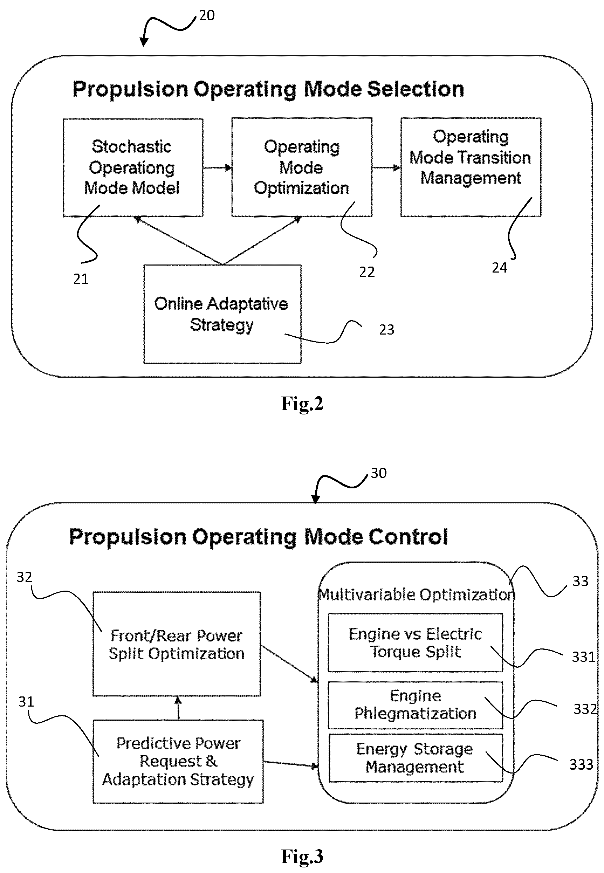

With reference to figure 2, the outer control layer 20 is organised in a series of interacting functional blocks to arrive at the optimal selection and definition of the propulsion operating mode which, as mentioned above, is chosen from: "park", "economy" and "power". A first functional block 21 of the outer control layer 20 defines a propulsion operating mode model from a stochastic point of view. This stochastic modelling of the propulsion operating mode is suitable for providing real time information on the so-called "uncertain" variables: for example, driving style, traffic conditions, weather conditions, decay of the vehicle performance related to its ageing. Stochastic modelling also makes use a functional layer 40) of learning strategies which, using artificial intelligence techniques, can, for example, "learn" and therefore predict the route the vehicle will take and the habits (driving style) of the driver.

The second functional block 22 of the outer control layer 20 receives the stochastic elaborations from the first functional block 21 and carries out the selection of the optimal propulsion operating mode. This selection is used to optimise the overall efficiency of the hybrid drive system and its performance.

Both the first function block 21 and the second function block 22 receive further information from a third function block 23 of the outer control layer 20, which defines "online", i.e. real-time, adaptation strategies. These adaptation strategies are based on learning conditions during the real life of the vehicle and for each of the propulsion operating modes. Finally, a fourth functional block 24 of the outer control layer 20 is subservient to the propulsion operating mode transition strategies, i.e. the transition from one operating mode to another. The transition is managed in such a way that this transition is smoothed out and optimised for better entry into the next operating mode.

With reference to figure 3, the inner control layer 30 subservient to the control of the selected propulsion operating mode is in turn organised in a series of interacting functional blocks.

A first function block 31 of the inner control layer 30 manages the power demand predictively and with the aid of the learning strategies of the functional layer 40. In practice, in this functional block the future torque/power demand is estimated on the basis of the current torque/power demand and local and/or remote predictive information, as well as on the basis of "online" adaptive optimisation strategies based on the real-time learning strategies. This future, i.e. "wide-spectrum" optimisation is based on cloud-assisted adaptive mechanisms, for example.

A second functional block 32 of the inner control layer 30, if receiving processing data from the first functional block 31, distributes power to the front and rear axles to optimise the vehicle's propulsion performance and driveability.

Finally, a third function block 33 of the inner control layer 30, receiving processing data from the first function block 31 or from the second function block 32, manages the optimal and multi-variable coordinated control of the subsystems of the hybrid propulsion system (e.g., the internal combustion engine, the mechanical transmission, the electric motor, the electrically driven flywheel). The third functional block 33 is in turn organised into further functional sub-levels and for each propulsion operating mode selected by the outer control layer 20, the propulsion operating mode control strategy performs further controls, as described below.

A first function sub-level 331 of function block 33 allocates torque between the internal combustion engine and the electric motor and manages the state of the mechanical transmission to optimise the efficiency and propulsion performance of the vehicle.

A second sub-function 332 of function block 33 defines optimal phlegmatisation with online adaptation to real-life conditions. Phlegmatisation refers to the optimisation of torque distribution between the internal combustion engine and the electric motor during transient manoeuvres, e.g. abrupt acceleration.

Finally, a third functional sub-level 331 of function block 33 manages the energy storage level of the electrically driven flywheel (and any batteries) to optimise component life and performance ranges.

The hybrid propulsion system 100, managed by the control method described above, is provided with an internal combustion engine, preferably powered by hydrogen, a kinetic energy recovery system, for example an electrically driven flywheel, preferably assisted by at least one battery, and at least one electric motor/generator.

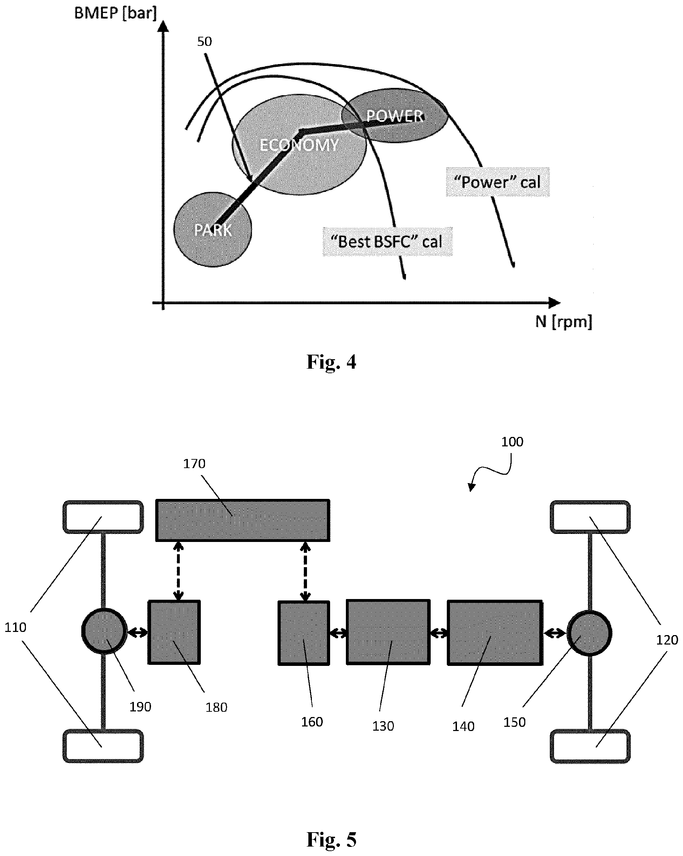

Figure 4 schematises a dimensioned plan of the internal combustion engine which, as is well known, shows the abscissae the number of revolutions (N[rpm]) and in ordinates the average effective pressure developed in the engine (BMEP [bar]).

The curve called "Power" cal is the calibration curve of the engine under conditions of maximum power, for example, for a maximum power of about 140 kW and a specific power of about 45-50 kW/l. The curve named "Best BSFC" cal is the calibration curve of the engine under minimum fuel consumption conditions, e.g. for a power of about 100 kW and a specific power of about 30-35 kW/l.

Figure 4 shows an example of a schematic representation of the optimal, discrete selection of load-dependent operating modes for the hybrid propulsion system.

Discretization is carried out by identifying three areas in the engine dimension plane: PARK, ECONOMY and POWER. Coordinated by the control strategy described above, the hybrid propulsion system always works in discrete mode on one of the three identified areas.

In particular, the "park" operating mode should not be understood as a traditional "Start&Stop" mode: a typical range of power developed by the engine in this mode of operation is between 10kW and 20kW. This power is used to sustain all the power accessories of the engine, the on-board utilities, the heating, ventilation and air conditioning system (HVAC) and the kinetic energy recovery system. The presence of this last component (and therefore its support) is indispensable, as will be seen below, to the hybrid propulsion system according to the present invention as it allows to eliminate or at least reduce to a minimum the need for a battery pack on board the vehicle.

The "economy" operating mode, where the engine power can vary, again by way of example, between 80 kW and 100 kW, is the one used for the majority of operating conditions. For example, in the case of a bus, this mode can be used during both the acceleration and the cruise phases of the vehicle.

Advantageously, the area of the "economy" operating mode can be representative of the average propulsive power of the corresponding application. Operating for most of the conditions and therefore of the time in the "economy" operating mode minimises wear on the internal combustion engine, an advantage which is even more relevant if the fuel used is hydrogen.

Finally, the third operating mode, "power" mode, will be sized so that the engine power can vary, again as an example, between 120 kW and 140 kW. The "power" operating mode (which is understood to be close to or equal to the engine's maximum power) is used to reach power peaks in cases of demanding requirements and/or sudden acceleration.

An example of the trajectory of the operating points of the hybrid propulsion system, i.e. the internal combustion engine and the kinetic energy recovery system, is shown with reference 50 in figure 4. In the following, some electro-mechanical architectures of the hybrid propulsion system 100 operated by the control strategy according to the present invention will now be described.

With reference to figure 5, a first electro-mechanical architecture of the hybrid propulsion system 100 using the control strategy according to figures 1-3 is presented, suitable for application on buses. In particular, the block diagram shows the front of the vehicle with its front wheels 110 and the rear of the vehicle with its rear wheels 120. In this and subsequent figures, the mechanical connections are represented by continuous line segments, while the electrical connections are represented by line segments in strokes. This first electro-mechanical architecture comprises an internal combustion engine 130, preferably powered by hydrogen, a mechanical transmission 140 mechanically connected to the internal combustion engine 130 and to a first differential 150 for transferring motion also differentially from the internal combustion engine 130 to the rear wheels 120. A first electric motor/generator 160 is mechanically connected to the internal combustion engine 130, according to a configuration referred to as P0 or P1.

The first electric motor/generator 160 is electrically connected to a kinetic energy recovery system, for example an electrically driven flywheel 170, which in turn is electrically connected to a second electric motor/generator 180, according to the hybrid configuration referred to as P4. This second electric motor/generator 180 is mechanically connected to a second differential 190 that transmits motion, also differentiated, to the front wheels 110.

The operation of the internal combustion engine, the mechanical transmission and the differential are considered familiar to a technician in the sector and will not be discussed further.

Some mention will be made, however, of the configurations and positioning of the electric motors/generators. As is well known, the acronyms P0, P1, P2, P3 and P4 identify the "distance" between the electric motor and the wheels, which decreases from P0 to P4.

The first engine/electric generator 160 is arranged in configuration P0 or P1, i.e. it is directly connected to the internal combustion engine 130. Depending on their size, smaller electrical units may be mounted in place of the alternator and then connected to the combustion engine by a belt in a configuration identified as P0. These engines are sometimes referred to as BAS (Belt Alternator Starter) and also act as a starter motor and generator. If the electric motor/generator is inserted directly, i.e. without the interposition of a drive belt, at the output of the internal combustion engine, we have the configuration P1, which sees the electric machine turn at the same speed as the drive shaft of the internal combustion engine. Regardless of its arrangement, in operation with an internal combustion engine, this first engine/electric generator 160 uses part of the power delivered by the internal combustion engine, working as an electric generator, to transfer electrical energy to the electrically driven flywheel 170 which stores it in the form of kinetic energy. During operation without a heat engine, the first electric motor/generator 160 will absorb electrical energy from the electrically driven flywheel 170 and, working this time as an electric motor will transfer mechanical energy to the mechanical transmission 140 and from this to the rear wheels 120. For bus application, the first electric motor/generator 160 may have an electrical output in the range of 50 kW to 80 kW and possibly be of high supply voltage.

The second motor/electric generator 180 has a P4 configuration, i.e. it is an electric motor acting exclusively on the axle not connected to the internal combustion engine, in this case the front axle. In this way, acting as an electric motor, it can transfer mechanical energy to the front wheels 110 to realise an all-wheel drive without mechanical connection to the internal combustion engine 130. By switching off the heat engine, purely electric operation can be realised. Functioning as an electric generator, for example by recovering energy during braking, the second electric motor/generator 180 can also transfer electrical energy to the electrically driven flywheel 170. For bus application, the second electric motor/generator 180 may have an electrical output in the range of 200 kW and must have a high supply voltage.

Advantageously, in addition to the electrically driven flywheel 170, which will in any case have to be of medium size (for example, in the range between 500 kJ to 700kJ), a small power supply battery can also be used.

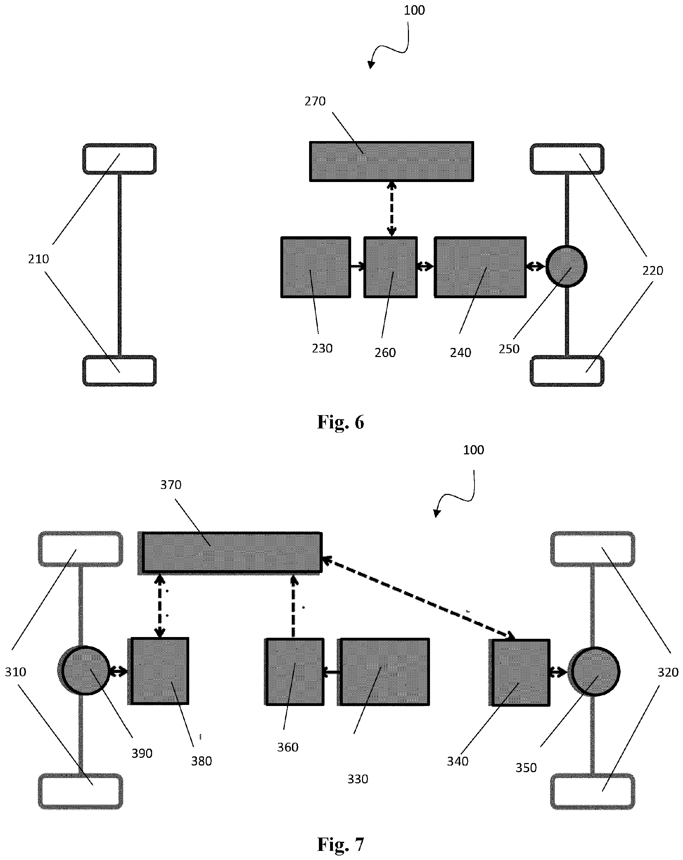

With reference to figure 6, a second electro-mechanical architecture of the hybrid propulsion system 100 using the control strategy of figures 1-3 is now presented, which is also suitable for application on buses. In particular, the block diagram shows the front of the vehicle with its front wheels 210 and the rear of the vehicle with its rear wheels 220. This second electro-mechanical architecture comprises an internal combustion engine 230, preferably supplied with hydrogen, a mechanical transmission 240 mechanically connected to the internal combustion engine 230 and to a differential 250 for transferring motion also differentially from the internal combustion engine 230 to the rear wheels 220. An electric motor/generator 260 is mechanically connected between the internal combustion engine 230 and the transmission 240, according to a configuration referred to as P2 or P3. The electric motor/generator 260 is electrically connected to a kinetic energy recovery system, for example an electrically driven flywheel 270.

The electric motor/generator 260 is arranged according to configuration P2 or P3, i.e. it is inserted between the internal combustion engine 230 and the mechanical transmission 240 (configuration P2, as in figure 6), or downstream of the mechanical transmission 240 (configuration P3, similarly operating and therefore not shown in figure 6). By using a known type of clutch (not shown in figure 6) between internal combustion engine 230 and electric motor/generator 260, it is possible to connect the electric motor/generator to the transmission input and make it supply energy instead of the internal combustion engine. Alternatively, it is of course possible to move the vehicle with only the electric motor, keeping the internal combustion engine switched off. Regardless of its arrangement upstream or downstream of the mechanical transmission 240, in operation with the internal combustion engine switched on, this electric motor/generator 260 uses part of the power delivered by the internal combustion engine, working as an electric generator, to transfer electrical energy to the electrically driven flywheel 270 which stores it in the form of kinetic energy. For application on buses, the engine/electric generator 260 may have an electrical power in the range of 50 kW to 200 kW and must necessarily have a high supply voltage.

Advantageously, in addition to the electrically-driven flywheel 270 which will in any case have to be of medium size, a small power supply battery can also be used.

With reference to figure 7, a third electro-mechanical architecture of the hybrid propulsion system 100 using the control strategy of figures 1-3 is now presented, which is also suitable for bus application. In particular, the architecture of figure 7 represents a series hybrid or "range extender" and the block diagram shows the front of the vehicle with its front wheels 310 and the rear of the vehicle with its rear wheels 320. This third electro-mechanical architecture comprises an internal combustion engine 330, preferably powered by hydrogen, and a first electric motor/generator 340, according to configuration P4, mechanically connected to a first differential 350 for transferring motion also in differential mode to the rear wheels 320. In particular, acting as an electric motor it can transfer mechanical energy to the rear wheels 320 without there being any mechanical connection to the internal combustion engine 330. By switching off the internal combustion engine, purely electrical operation can be achieved. Acting as an electric generator, for example by recovering energy during braking, the first electric motor/generator 340 can transfer electrical energy to the electrically driven flywheel 370. The first electric motor/generator 340 may have an electrical output in the range of 200 kW and must have a high supply voltage.

A second electric motor/generator 360 is mechanically connected to the internal combustion engine 330, in a P0 configuration, which in turn is electrically connected to a kinetic energy recovery system, for example an electrically driven flywheel 370. The second electric motor/generator 360 uses part of the power delivered by the internal combustion engine, working as an electric generator, to transfer electrical energy to the electrically driven flywheel 370 which stores it in the form of kinetic energy. For bus application, the electric motor/generator 260 may have an electrical power in the range of 100 kW and will necessarily have to be of high supply voltage.

Advantageously, in addition to the electrically driven flywheel 370, which must in any case be of medium size, a small power supply battery may also be used.

Preferably, a third electric motor/generator 380 may be electrically connected to the electrically driven flywheel 370, in a P4 configuration. This third electric motor/generator 380 is mechanically connected to a second differential 390 that transmits motion, also differentiated, to the front wheels 310. In this way, acting as an electric motor, it can transfer mechanical energy to the front wheels 310 to achieve all-wheel drive without mechanical connection to the internal combustion engine 130. By switching off the heat engine, purely electric operation can be realised. Operating as an electric generator, for example by recovering energy during braking, the third motor/electric generator 380 can also transfer electrical energy to the electrically driven flywheel 370. The third electric motor/generator 380 may have an electric power of up to 200 kW and must have a high supply voltage.

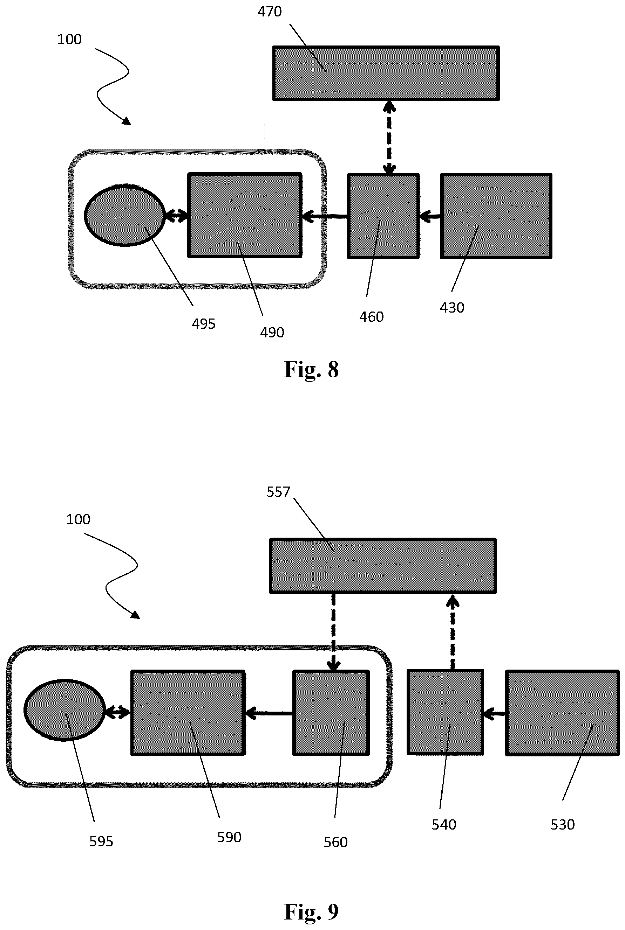

With reference to figure 8, a fourth electro-mechanical architecture of the hybrid propulsion system 100 using the control strategy of figures 1-3 is now described, which is suitable for GenSet application. This fourth electro-mechanical architecture comprises an internal combustion engine 430, preferably supplied with hydrogen, and an electric motor/generator 460, according to configuration P1/P2, mechanically connected to the internal combustion engine 430. In turn, the electric motor/generator 460 is mechanically connected to an operating machine, for example a hydraulic pump 490 provided with a user load 495, and electrically connected to a kinetic energy recovery system, for example an electrically driven flywheel 470. The electric motor/generator 460 uses part of the power delivered by the internal combustion engine, working as an electric generator, to transfer electrical energy to the electrically driven flywheel 470 which stores it in the form of kinetic energy. On the other hand, working as an electric motor, the electric motor/generator 460 will be able to directly power, with the heat engine switched off, the hydraulic pump 490, drawing the necessary electrical energy from the electrically driven flywheel 470.

Advantageously, in addition to the electrically driven flywheel 470, which should in any case be of medium size, it is also possible to use a small supply battery.

Finally, with reference to figure 9, a fifth electro-mechanical architecture of the hybrid propulsion system 100 using the control strategy of figures 1-3 is now described, which is also suitable for GenSet application. This fifth electro-mechanical architecture comprises an internal combustion engine 530, preferably supplied with hydrogen, and an electric motor/generator 540, according to configuration P1/P2, mechanically connected to the internal combustion engine 530. The electric motor/generator 540 is electrically connected with a kinetic energy recovery system, for example an electrically driven flywheel 570. The electric motor/generator 540 uses part of the power delivered by the internal combustion engine, working as an electric generator, to transfer electrical energy to the electrically driven flywheel 570 which stores it in the form of kinetic energy.

The electrically driven flywheel is electrically connected to an electric motor 560, which in turn is mechanically connected to an operating machine, for example a hydraulic pump 590, and an end user load 595. The electric motor 560 absorbs electrical energy from the electrically driven flywheel 570 and produces the kinetic energy required to move the hydraulic pump 590 and its load 595.

Advantageously, in addition to the electrically driven 570 flywheel, which must in any case be of medium size, a small supply battery can also be used.

Ultimately, the versatility and simplicity of the control strategy makes the relevant hybrid propulsion system suitable for both the automotive sector, in particular heavy goods vehicles, buses, off-road vehicles, but also for the sector of fixed installations for power generation or power and heat generation in combined mode. The examples of electro-mechanical architecture presented above are by no means limiting. Furthermore, the control strategy according to the present invention is also suitable in the preferred case where the internal combustion engine is supplied with hydrogen.

In addition to the embodiment of the invention as described above, it should be understood that there are numerous other variants. It should also be understood that these forms of embodiment are only illustrative and do not limit either the scope of the invention, its applications or its possible configurations. On the contrary, although the above description enables the skilled person to implement the present invention according to at least one exemplary embodiment thereof, it should be understood that many variations of the described components are possible without departing from the scope of the invention as defined in the appended claims.

## Claims

1. Method of controlling a hybrid propulsion system (100), the method being organized in a hierarchical control structure (10) having an outer control layer (20), an inner control layer (30), and a functional layer (40) of learning strategies, the method comprising the following steps:
- receiving a plurality of exogenous inputs from the external environment and a plurality of feedbacks from the hybrid propulsion system (100),
- based on the previous step, selecting, using adaptive logic, a propulsion operating mode for the hybrid propulsion system (100) by means of the outer control layer (20),
- controlling subsystems of the hybrid propulsion system (100) by means of the inner control layer (30), wherein the step of controlling subsystems of the hybrid propulsion system (100) by means of the inner control layer (30), is executed by the following steps:
a) managing the power demand predictively and with the aid of the functional layer (40) of learning strategies by means of a first functional block (31), and
b) managing the coordinated and multi-variable control of subsystems of the hybrid propulsion system (100) by means of a third functional block (33),
the control method being **characterised in that** the step of controlling subsystems of the hybrid propulsion system (100) is executed by the following step which follows step a) and precedes step b):
- distributing the power of the hybrid propulsion system (100) to the front and rear axles by means of a second functional block (32).

2. Method according to claim 1, wherein the propulsion operating mode comprises "park", "economy" and "power".

3. Method according to claim 1 or 2, wherein the step of selecting a propulsion operating mode is executed by the following steps:
- processing a stochastic model of the propulsion operating mode by means of a first functional block (21),
- performing a selection of the propulsion operating mode by means of a second functional block (22),
- defining "online" adaptive strategies by means of a third functional block (23), and
- implementing transition strategies from one propulsion operating mode to the next by means of a fourth functional block (24).

4. Method according to claim 3, wherein the stochastic model of the propulsion operating mode provides real-time information on driving style, traffic conditions, weather conditions, vehicle performance decay, using the functional layer (40) of learning strategies.

5. Method according to claim 1, wherein the subsystems of the hybrid propulsion system (100) comprise an internal combustion engine, a kinetic energy recovery system, at least one electric motor/generator, a mechanical transmission.

6. Method according to claim 5, wherein the step of managing the coordinated and multi-variable control is executed by the following steps:
- by means of a first functional sub-layer (331) allocating torque between the internal combustion engine and the at least one electric motor/generator and managing the state of the mechanical transmission,
- by means of a second functional sub-layer (332) defining optimisation of torque distribution between the internal combustion engine and the electric motor during transient manoeuvres of the hybrid propulsion system (100), and
- by means of a third functional sub-layer (333) managing the energy storage level of the kinetic energy recovery system.

7. Hybrid propulsion system (100) comprising an internal combustion engine, a kinetic energy recovery system, and at least one electric motor/generator, the hybrid propulsion system (100) being **characterized in that** it is operated by a control method according to any of the preceding claims.

8. Hybrid propulsion system (100) according to claim 7, wherein the internal combustion engine is powered by hydrogen.

9. Hybrid propulsion system (100) according to claim 7 or 8, wherein the kinetic energy recovery system is an electrically driven flywheel.

## Patentansprüche

1. Verfahren zur Steuerung eines Hybridantriebssystems (100), das in einer hierarchischen Steuerungsstruktur (10) mit einer äußeren Steuerungsebene (20), einer inneren Steuerungsebene (30) und einer Funktionsebene (40) mit Lernstrategien organisiert ist und die folgenden Schritte umfasst:
- empfangen mehrerer exogener Eingaben aus der Umgebung und mehrerer Rückmeldungen vom Hybridantriebssystem (100),
- auswählen eines Antriebsbetriebsmodus für das Hybridantriebssystem (100) basierend auf dem vorherigen Schritt mittels adaptiver Logik durch die äußere Steuerungsebene (20),
- steuern von Subsystemen des Hybridantriebssystems (100) durch die innere Steuerungsebene (30), wobei der Schritt der Steuerung von Subsystemen des Hybridantriebssystems (100) durch die innere Steuerungsebene (30) durch die folgenden Schritte ausgeführt wird:
a) prädiktive Steuerung des Leistungsbedarfs mithilfe der Funktionsebene (40) mit Lernstrategien durch einen ersten Funktionsblock (31) und
b) die koordinierte und multivariable Steuerung der Subsysteme des Hybridantriebssystems (100) mittels eines dritten Funktionsblocks (33),
das Steuerungsverfahren ist **dadurch gekennzeichnet, dass** die, Steuerung der Subsysteme des Hybridantriebssystems (100) durch den folgenden Schritt ausgeführt wird, der auf Schritt a) folgt und Schritt b) vorangeht:
- Verteilung der Leistung des Hybridantriebssystems (100) auf Vorder- und Hinterachse mittels eines zweiten Funktionsblocks (32).

2. Verfahren nach Anspruch 1, wobei der Antriebsbetriebsmodus die Betriebsarten "Parken", "Sparbetrieb" und "Leistung" umfasst.

3. Verfahren nach Anspruch 1 oder 2, wobei die Auswahl eines Antriebsbetriebsmodus durch die folgenden Schritte erfolgt:
- Verarbeitung eines stochastischen Modells des Antriebsbetriebsmodus durch einen ersten Funktionsblock (21),
- Auswahl des Antriebsbetriebsmodus durch einen zweiten Funktionsblock (22),
- Definition von Online-Adaptionsstrategien durch einen dritten Funktionsblock (23) und
- Implementierung von Übergangsstrategien von einem Antriebsbetriebsmodus zum nächsten durch einen vierten Funktionsblock (24).

4. Verfahren nach Anspruch 3, wobei das stochastische Modell des Antriebsbetriebsmodus mithilfe der Funktionsebene (40) der Lernstrategien Echtzeitinformationen zu Fahrstil, Verkehrsbedingungen, Wetterbedingungen und Leistungsabfall des Fahrzeugs liefert.

5. Verfahren nach Anspruch 1, wobei die Subsysteme des Hybridantriebssystems (100) einen Verbrennungsmotor, ein System zur Rückgewinnung kinetischer Energie, mindestens einen Elektromotor/Generator und ein mechanisches Getriebe umfassen.

6. Verfahren nach Anspruch 5, wobei die koordinierte und multivariable Steuerung durch die folgenden Schritte erfolgt:
- mittels einer ersten Funktionsebene (331), die das Drehmoment zwischen dem Verbrennungsmotor und dem mindestens einen Elektromotor/Generator verteilt und den Zustand des mechanischen Getriebes steuert,
- mittels einer zweiten Funktionsebene (332), die die Optimierung der Drehmomentverteilung zwischen Verbrennungsmotor und Elektromotor während transienter Manöver des Hybridantriebssystems (100) definiert, und
- mittels einer dritten Funktionsebene (333), die den Energiespeicherstand des kinetischen Energierückgewinnungssystems steuert.

7. Hybridantriebssystem (100), bestehend aus einem Verbrennungsmotor, einem kinetischen Energierückgewinnungssystem und mindestens einem Elektromotor/Generator, wobei das Hybridantriebssystem (100) **dadurch gekennzeichnet ist, dass** es mit einem Steuerungsverfahren nach einem der vorhergehenden Ansprüche betrieben wird.

8. Hybridantriebssystem (100) nach Anspruch 7, wobei der Verbrennungsmotor mit Wasserstoff betrieben wird.

9. Hybridantriebssystem (100) nach Anspruch 7 oder 8, wobei das System zur Rückgewinnung kinetischer Energie ein elektrisch angetriebenes Schwungrad ist.

## Revendications

1. Procédé de contrôle d'un système de propulsion hybride (100), organisé selon une structure de contrôle hiérarchique (10) comportant une couche de contrôle externe (20), une couche de contrôle interne (30) et une couche fonctionnelle (40) de stratégies d'apprentissage. Le procédé comprend les étapes suivantes :
- réception d'une pluralité d'entrées exogènes provenant de l'environnement extérieur et d'une pluralité de rétroactions du système de propulsion hybride (100),
- sur la base de l'étape précédente, sélection, par logique adaptative, d'un mode de fonctionnement de propulsion pour le système de propulsion hybride (100) au moyen de la couche de contrôle externe (20),
- contrôle des sous-systèmes du système de propulsion hybride (100) au moyen de la couche de contrôle interne (30), l'étape de contrôle des sous-systèmes du système de propulsion hybride (100) au moyen de la couche de contrôle interne (30) étant exécutée selon les étapes suivantes :
a) gestion prédictive de la demande de puissance à l'aide de la couche fonctionnelle (40) de stratégies d'apprentissage au moyen d'un premier bloc fonctionnel (31), et
b) gérer la commande coordonnée et multivariable des sous-systèmes du système de propulsion hybride (100) au moyen d'un troisième bloc fonctionnel (33),
le procédé de commande étant **caractérisé en ce que** l'étape de commande des sous-systèmes du système de propulsion hybride (100) est exécutée par l'étape suivante qui suit l'étape a) et précède l'étape b) :
- répartir la puissance du système de propulsion hybride (100) aux essieux avant et arrière au moyen d'un deuxième bloc fonctionnel (32).

2. Procédé selon la revendication 1, dans lequel le mode de propulsion comprend les modes « stationnement », « économie » et « puissance ».

3. Procédé selon la revendication 1 ou 2, dans lequel l'étape de sélection d'un mode de propulsion comprend les étapes suivantes :
- traitement d'un modèle stochastique du mode de propulsion au moyen d'un premier bloc fonctionnel (21),
- sélection du mode de propulsion au moyen d'un deuxième bloc fonctionnel (22),
- définition de stratégies adaptatives « en ligne » au moyen d'un troisième bloc fonctionnel (23), et
- mise en œuvre de stratégies de transition d'un mode de propulsion au suivant au moyen d'un quatrième bloc fonctionnel (24).

4. Procédé selon la revendication 3, dans lequel le modèle stochastique du mode de propulsion fournit des informations en temps réel sur le style de conduite, les conditions de circulation, les conditions météorologiques et la dégradation des performances du véhicule, grâce à la couche fonctionnelle (40) de stratégies d'apprentissage.

5. Procédé selon la revendication 1, dans lequel les sous-systèmes du système de propulsion hybride (100) comprennent un moteur à combustion interne, un système de récupération d'énergie cinétique, au moins un moteur/générateur électrique, une transmission mécanique.

6. Procédé selon la revendication 5, dans lequel l'étape de gestion de la commande coordonnée et multivariable est exécutée selon les étapes suivantes :
- au moyen d'une première sous-couche fonctionnelle (331) répartissant le couple entre le moteur à combustion interne et le ou les moteurs/générateurs électriques et gérant l'état de la transmission mécanique ;
- au moyen d'une deuxième sous-couche fonctionnelle (332) définissant l'optimisation de la répartition du couple entre le moteur à combustion interne et le moteur électrique lors des manœuvres transitoires du système de propulsion hybride (100) ; et
- au moyen d'une troisième sous-couche fonctionnelle (333) gérant le niveau de stockage d'énergie du système de récupération d'énergie cinétique.

7. Système de propulsion hybride (100) comprenant un moteur à combustion interne, un système de récupération d'énergie cinétique et au moins un moteur/générateur électrique, le système de propulsion hybride (100) étant **caractérisé en ce qu'**il est exploité par un procédé de commande selon l'une quelconque des revendications précédentes.

8. Système de propulsion hybride (100) selon la revendication 7, dans lequel le moteur à combustion interne est alimenté par de l'hydrogène.

9. Système de propulsion hybride (100) selon la revendication 7 ou 8, dans lequel le système de récupération d'énergie cinétique est un volant d'inertie à entraînement électrique.
